# EUROPÄISCHE PATENTSCHRIFT

(11) **EP 2 072 861 B1**
(45) Veröffentlichungstag und Bekanntmachung des Hinweises auf die Patenterteilung: **16.06.2010**
(21) Anmeldenummer: 08170437.1
(22) Anmeldetag: 02.12.2008
(51) Int. Cl.: F16H 25/24

(54) **Verdrehsicherung mit Toleranzausgleich**
Anti-twist device with tolerance balance
Sécurité anti-rotation doté d'un égalisation de la tolérance

(30) Priorität: 19.12.2007 DE 102007055862
(43) Veröffentlichungstag der Anmeldung: 24.06.2009
(73) Patentinhaber: ZF Friedrichshafen AG, 88038 Friedrichshafen (DE)
(72) Erfinder: Wolf, Daniel, 88048 Friedrichshafen (DE); Schmid, Thomas, 88094, Oberteuringen (DE)

(56) Entgegenhaltungen:
- DE-U1- 20 310 872
- US-A- 4 074 586

## Beschreibung

Die Erfindung betrifft eine Verdrehsicherung zur Verhinderung einer Drehung eines ersten Bauteils bezüglich eines zweiten Bauteils gemäß dem Oberbegriff des Patentanspruchs 1.

Verdrehsicherungen werden in der Technik eingesetzt, um drehmomentbeaufschlagte Bauteile gegen eine ungewollte Verdrehung gegenüber weiteren Bauteilen zu sichern.

Die gattungsbildende Gebrauchsmusterschrift DE 203 10 872 U1 offenbart eine Verdrehsicherung, welche die Drehung eines axial verschiebbaren ersten Bauteils, in Form einer Schubstange, gegenüber einem zweiten Bauteil, in Form eines Gehäuses, verhindert. Um das an dem ersten Bauteil anliegende Drehmoment abzustützen, sind in das kreisrunde Querschnittsprofil des zweiten Bauteils zwei Abflachungen V-förmig eingearbeitet, wodurch das Profil hier eine teils halbrunde, teils konische Form erhält. Gegen das erste Bauteil ist die Stirnseite einer zylinderförmigen Verdrehsicherung gedrückt, welche zwei schräg verlaufende Seitenwände aufweist, die an den Abflachungen des ersten Bauteils anliegen. Der zylindrische Körper der Verdrehsicherung ist in einer Durchgangsbohrung des zweiten Bauteils arretiert, wobei ein Deckel die Durchgangsbohrung verschließt und zusammen mit einer Druckfeder die Verdrehsicherung gegen das erste Bauteil drückt. Bei einer Beaufschlagung des ersten Bauteils mit einem Drehmoment, stützt sich, je nach Drehsinn des Drehmoments, eine der Abflachungen des ersten Bauteils gegen eine der Seitenwände der Verdrehsicherung ab, welche sich wiederum über die Druckfeder und den Deckel an dem zweiten Bauteil abstützt, wodurch eine Drehung des ersten Bauteils gegenüber dem zweiten Bauteil verhindert wird.

Um im Stand der Technik trotz nicht exakt geformter und zueinander ausgerichteter Bauteile kein Drehspiel zwischen der Verdrehsicherung und dem ersten Bauteil zuzulassen, wird die Verdrehsicherung durch die Feder ständig gegen das erste Bauteil gedrückt, wodurch dieses einer kontinuierlichen Querkraft ausgesetzt ist. Da die Querkraft nicht in unmittelbarer Nähe der Verdrehsicherung durch das zweite Bauteil abgestützt wird, bewirkt sie eine dauerhafte Durchbiegung des ersten Bauteils. Zudem findet bei einer Axialbewegung des ersten Bauteils durch die Querkraft eine erhöhte Reibung zwischen den Abflachungen und den Seitenwänden statt, welche im Stand der Technik durch in die Seitenwände des Halteteils eingelassene Kugellagerkugeln reduziert wird. Auf Grund der hierdurch erzeugten starken Konzentration der Abstützfläche zwischen den Seitenwänden und den Abflachungen, erhöht sich jedoch der Verschleiß, zumal die Kugeln in den Seitenwänden örtlich fixiert sind und sich somit keine verschleißarme Rollreibung einstellen kann. Insgesamt betrachtet unterliegt das erste Bauteil neben der Torsionsbelastung durch das anliegende Drehmoment, einer zusätzlichen Verschleiß- und Biegebelastung durch die von der Verdrehsicherung hervorgerufene Querkraft. Insbesondere für Leichtbauwerkstoffe mit einer erhöhten Kriechneigung oder einer geringen Oberflächenhärte, wäre die im Stand der Technik vorgeschlagene Lösung somit ungeeignet.

Aufgabe der Erfindung ist es daher eine querkraft- und drehspielfreie Verdrehsicherung zur Verhinderung einer Drehung eines ersten Bauteils bezüglich eines zweiten Bauteils um eine Drehachse zu schaffen.

Sie wird gemäß den Merkmalen des ersten Patentanspruchs gelöst. Weitere Ausgestaltungen ergeben sich aus den Unteransprüchen. Hiernach ist das erste Bauteil und das zweite Bauteil jeweils drehfest mit der erfindungsgemäßen Verdrehsicherung verbunden, wobei die Verdrehsicherung das erste Bauteil zumindest teilweise umschließt und zumindest teilweise zwischen dem ersten und zweiten Bauteil angeordnet ist. Dabei ist die Verdrehsicherung sowohl gegenüber dem ersten Bauteil entlang einer orthogonal zur Drehachse verlaufenden ersten Raumrichtung verschieblich, als auch gegenüber dem zweiten Bauteil entlang einer ebenfalls orthogonal zur Drehachse, jedoch nicht koaxial zur ersten Raumrichtung verlaufenden zweiten Raumrichtung verschieblich, wodurch die beiden Bauteile gegeneinander drehspielfrei sind und auf einer durch die beiden Raumachsen aufgespannten Ebene gegeneinander verschoben werden können. Dies gewährleistet, dass trotz einer nicht exakter Ausrichtung und Ausformung der Bauteile, keine Querkraft zur Erzeugung der Drehspielfreiheit notwendig ist, welche auf die Verdrehsicherung oder die beiden Bauteile wirkt.

In einer vorteilhaften Ausgestaltung der Erfindung umschließt das zweite Bauteil das erste Bauteil zumindest teilweise. Beispielsweise kann das zweite Bauteil einen rohr- oder U-förmigen Querschnitt aufweisen, in dessen Inneren das erste Bauteil angeordnet ist. Eine geschlossene rohrförmige Form hat hierbei den Vorteil, dass sie stabiler ist als eine Offene und daher ein höheres Drehmoment von dem ersten Bauteils aufnehme kann. Zudem kann das erste Bauteil gut vor äußeren Einflüssen geschützt werden. Eine offene Form des zweiten Bauteils hat hingegen den Vorteil, dass leichter auf die Verdrehsicherung zur Montage oder Wartung zugegriffen werden kann.

Es ist jedoch nicht erforderlich, dass das zweite Bauteil das erste Bauteil umschließt, vielmehr kann die Form des zweiten Bauteils annähernd beliebig gestaltet sein, mit der Einschränkung, dass es drehfest und entlang der zweiten Raumrichtung verschieblich mit der Verdrehsicherung verbunden sein muss.

In einer weiteren besonders vorteilhaften Ausgestaltung der Erfindung sind mindestens eine erste und mindestens eine zweite Kontaktfläche unabhängig voneinander an der Verdrehsicherung oder dem ersten Bauteil angeordnet, wobei beide Kontaktflächen entlang der ersten Raumrichtung verlaufen. Die Verdrehsicherung und das erste Bauteil liegen dabei derart über die Kontaktflächen aneinander an, dass die Verdrehsicherung gegenüber dem ersten Bauteil sowohl drehfest, als auch in Richtung der ersten Raumrichtung verschieblich ist. Zur Verbindung der Verdrehsicherung mit dem zweiten Bauteil, können mindestens eine dritte und mindestens eine vierte Kontaktfläche unabhängig voneinander auf der Verdrehsicherung oder dem zweiten Bauteil angeordnet sein, wobei die dritte und vierte Kontaktfläche entlang der zweiten Raumrichtung verlaufen. Die Verdrehsicherung und das zweite Bauteil liegen dabei derart über die dritte und vierte Kontaktflächen aneinander an, dass die Verdrehsicherung gegenüber dem zweiten Bauteil sowohl drehfest, als auch in Richtung der zweiten Raumrichtung verschieblich ist.

Beispielsweise weist die Verdrehsicherung eine U-förmige Querschnittsform auf, wobei die Innenseiten der beiden Schenkel der U-Form zwei erste Kontaktflächen bilden. Das erste Bauteil weist hierbei eine quadratische Querschnittform auf, und zwei gegenüberliegende, entlang der ersten Raumrichtung verlaufende Seiten sind als zweite Kontaktflächen ausgebildet, welche an den ersten Kontaktflächen der Verdrehsicherung anliegen. Die Stirnseiten der Schenkel und die Unterseite der U-Form verlaufen entlang der um 90° zur ersten Raumrichtung verlaufenden zweiten Raumrichtung und bilden jeweils eine dritte Kontaktfläche, an welcher eine vierte Kontaktfläche des zweiten Bauteils anliegt. Hierdurch ist das erste Bauteil gegenüber dem zweiten Bauteil drehspielfrei und auf einer durch die beiden Raumrichtungen aufgespannten Ebene frei verschiebbar, wodurch Ausrichtungsfehler der beiden Bauteile querkraftfrei ausgeglichen werden können. Der maximal mögliche Verschiebungsweg ist dabei durch die Längen der Kontaktflächen begrenzt, weshalb diese derart dimensioniert sein müssen, dass die schlechteste Ausrichtung und Ausformung der beiden Bauteile zueinander zu keiner Verschiebung der Verdrehsicherung um den maximal möglichen Verschiebungsweg führt.

Es ist nicht notwendig, dass die Kontaktflächen über den gesamten Verschiebungsweg hinweg konstant in eine einzelne Raumrichtung gerichtet sind, d.h. sie können auch wellig oder eckig ausgestaltet sein. Dies gilt jedoch nur unter der Vorraussetzung, dass die Form der Kontaktflächen derart ausgebildet ist, dass die Verdrehsicherung gegenüber dem ersten oder zweiten Bauteil entlang der Kontaktflächen verschoben werden kann, ohne dass sie sich verkeilt oder ein Drehspiel zwischen der Verdrehsicherung und dem ersten oder zweiten Bauteil entsteht. Mindestens eine der Kontaktflächen kann auch als Kontaktlinie ausgeführt sein, wodurch die Verdrehsicherung und das erste oder zweite Bauteil über einen gemeinsamen Berührpunkt oder eine gemeinsame Berührlinie aneinander anliegen können. Dies kann beispielsweise der Fall sein, wenn eine konvex geformte Fläche des ersten Bauteils an einer ebenfalls konvex geformten Fläche der Verdrehsicherung anliegt. Des Weiteren kann der Winkel zwischen den Raumrichtungen frei gewählt werden, mit der genannten Einschränkung, dass die beiden Raumrichtungen nicht koaxial zueinander verlaufen dürfen. Besonders vorteilhaft ist es jedoch, wenn der Winkel zwischen 45° und 135° und im Idealfall 90° beträgt, da bei einem Winkel von 90°, der zum Ausgleich der Ausrichtungs- und Formfehler benötigte Verschiebungsweg der Verdrehsicherung am kleinsten ist und somit die Verdrehsicherung äußerst kompakt ausgeführt sein kann.

In einer weiteren vorteilhaften Ausgestaltung der Erfindung liegen in den Bereichen, in welchen die Verdrehsicherung an dem ersten oder zweiten Bauteil anliegt Spielpassungen vor, wodurch eine Verschiebbarkeit der Verdrehsicherung gewährleistet ist. Die Spielpassung sollte dabei derart dimensioniert sein, dass sich die geforderte Drehspielfreiheit bei einer annehmbaren Verschiebbarkeit einstellt. Prinzipiell sollte die Spielpassung daher eher eng gewählt werden, beispielsweise durch eine H/h-Passung. Dabei ist es vorteilhaft, wenn in mindestens einem Bereich, in welchem die Verdrehsicherung an dem ersten oder zweiten Bauteil anliegt, zumindest zum Teil eine Übergangspassung vorliegt. Dies gilt insbesondere dann, wenn die Verdrehsicherung aus einem Werkstoff besteht, der eine geringeren Elastizität als Eisen aufweist, wodurch sie sich gut an die Form des ersten oder zweiten Bauteils anpassen kann und somit eine sehr gute Drehspielfreiheit bei einer gleichzeitigen Verschiebbarkeit erreichbar ist.

In einer Ausgestaltung der Erfindung sind das erste und das zweite Bauteil entlang der Drehachse des ersten Bauteils gegeneinander verschieblich, wobei die Verdrehsicherung entweder an dem ersten oder an dem zweiten Bauteil in Richtung der Drehachse ortsfest fixiert ist. Dabei kann das erste Bauteil eine Schubstange und das zweite Bauteil ein Gehäuse sein, welches die Schubstange zumindest teilweise umgibt, wobei die Verdrehsicherung eine Drehung der Schubstange in dem Gehäuse verhindert. Die Verdrehsicherung kann auch Teil eines Aktuators sein, welcher mindestens einen Motor, eine Spindelmutter oder ein Zahnrad und eine Schubstange umfasst, auf welcher sich eine Spindel oder eine Zahnstange befindet, bzw. welche mit einer Spindel oder einer Zahnstange verbunden ist. Hierbei umschließt das Gehäuse die genannten Teile des Aktuators vollständig oder teilweise. Der Motor versetzt bei Aktivierung des Aktuators die Spindelmutter oder das Zahnrad in Rotation, welche wiederum derart auf die Spindel oder die Zahnstange wirken, dass diese eine Bewegung in Richtung ihrer Längsachse macht, wodurch die Schubstange linear bewegt wird. Da durch die Übertragung der Rotationsbewegung der Spindelmutter oder des Zahnrades in eine Linearbewegung der Spindel oder der Zahnstange ein Drehmoment in die Spindel induziert werden kann, muss diese zur Verhinderung einer Drehbewegung in dem Gehäuse abgestützt werden. Hierzu ist die Verdrehsicherung derart zwischen der Welle und dem Gehäuse angeordnet, dass das Drehmoment auf das Gehäuse übertragen wird und gleichzeitig eine Linearbewegung der Schubstange, beispielsweise zur Durchführung von Stellaufgaben, ermöglicht wird. Ein derartiger Aktuator kann besonders vorteilhaft in einem Fahrzeugfahrwerk, beispielsweise zur Verstellung der Spur oder des Sturzes eingesetzt werden, oder zur Erzeugung einer Lenkhilfskraft in einer Fahrzeuglenkung, wobei die Verdrehsicherung auf Grund des geringen Verschleißes eine hohe Lebensdauer bewirkt.

Im Folgenden wird die Erfindung anhand von Beispielen und Zeichnungen näher erläutert, aus welchen weitere vorteilhafte Ausgestaltungen entnommen werden können. Es zeigen jeweils in schematischer Darstellung,
Fig. 1 eine Verdrehsicherung, welche die Drehung eines ersten Bauteil bezüglich eines zweiten Bauteils verhindert, wobei das zweite Bauteil rohrförmig die Verdrehsicherung und das erste Bauteil umgibt;
Fig. 2 einen Querschnitt durch das erste und zweite Bauteil aus Fig. 1, wobei das erste Bauteil sowohl in einer Soll-Position, als auch in einer gegenüber dem zweiten Bauteil versetzten Position dargestellt ist;
Fig. 3 eine Ausgestaltung der Verdrehsicherung, wobei das zweite Bauteil einen U-förmigen Querschnitt aufweist und das erste Bauteil einen Runden;
Fig. 4 eine Draufsicht auf die Verdrehsicherung und das erste und zweite Bauteil der Fig. 3;
Fig. 5 eine weitere Ausgestaltung der Verdrehsicherung, wobei das zweite Bauteil das erste Bauteil nicht umschließt und zwischen der Verdrehsicherung und dem ersten Bauteil Linearlager angeordnet sind;
Fig. 6 eine Ausgestaltung der Verdrehsicherung bei welcher die Kontaktflächen zwischen der Verdrehsicherung und dem ersten und zweiten Bauteil nicht konstant entlang einer Raumrichtung verlaufen;
Fig. 7 eine Anwendung der Verdrehsicherung in einem Aktuator, welcher eine Linearbewegung einer Schubstange erzeugt.

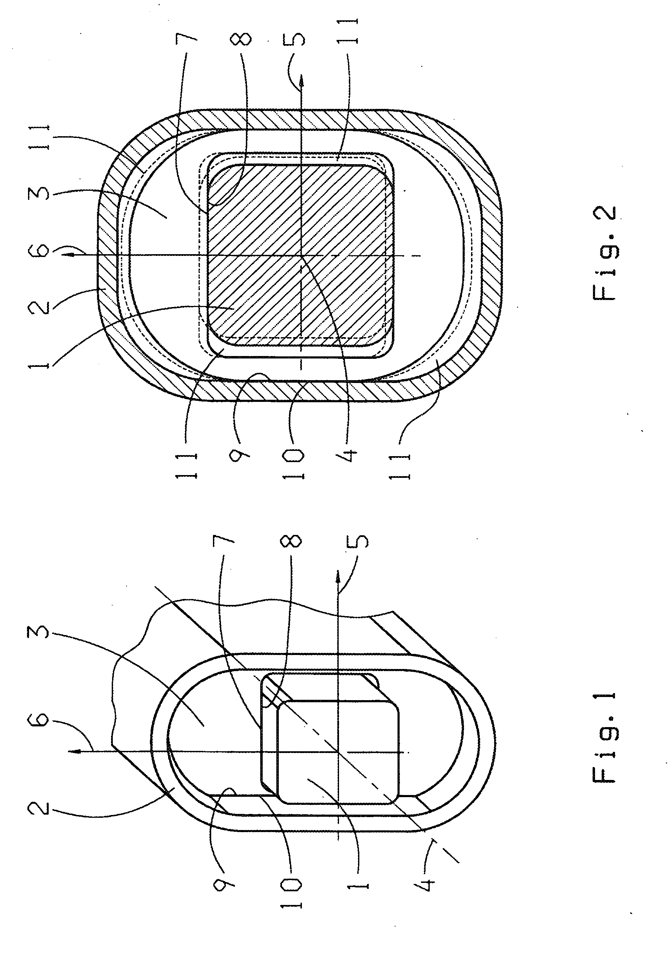

Fig. 1 zeigt ein polygonförmiges erstes Bauteil 1 und ein rohrförmiges zweites Bauteil 2, welche durch eine Verdrehsicherung 3 gegen ein unerwünschtes gegenseitiges Verdrehen um die Drehachse 4 geschützt sind, wobei die Drehsachse 4 der Längsachse des ersten Bauteils 1 entspricht und das zweite Bauteil 2 das erste Bauteil 1 entlang der Drehachse 4 umschließt. Die Verdrehsicherung 3 ist zwischen dem ersten und dem zweiten Bauteil 1, 2 angeordnet und gestattet eine Verschiebungen des ersten Bauteils 1 gegenüber dem zweiten Bauteil 2 sowohl entlang der Drehachse 4, als auch entlang der orthogonal zur Drehachse 4 verlaufenden ersten Raumrichtung 5 und der ebenfalls orthogonal zur Drehachse 4 verlaufenden zweiten Raumrichtung 6, welche sich in dem dargestellten Fall in einem idealen Winkel von 90° kreuzen. Hierzu ist das erste Bauteil 1 in eine Aussparung der Verdrehsicherung 3 eingeführt, welche die gleiche Höhe und eine etwas größere Breite aufweist, wodurch zwei gegenüberliegende und entlang der ersten Raumrichtung 5 verlaufende erste Kontaktflächen 7 der Verdrehsicherung 3 an zwei zweiten Kontaktflächen 8 des ersten Bauteils 1 anliegen. Die Außenkontur der Verdrehsicherung 3 weist die gleiche Breite, jedoch eine geringere Höhe als der durch das zweite Bauteil 2 gebildete Innenraum auf, wodurch zwei gegenüberliegende und entlang der zweiten Raumrichtung 6 verlaufende dritte Kontaktflächen 9 der Verdrehsicherung 3 an zwei vierten Kontaktflächen 10 des zweiten Bauteils 2 anliegen. Die Verdrehsicherung 3 ist somit gegenüber dem ersten Bauteil 1 entlang der ersten Raumrichtung 5 und gegenüber dem zweiten Bauteil 2 entlang der zweiten Raumrichtung 6 verschieblich, wodurch sie Abweichungen der Ausrichtung oder Form der beiden Bauteile 1, 2 ausgleicht, ohne dass Querkräfte in die Verdrehsicherung 3 oder das erste oder zweite Bauteil 1, 2 induziert werden. Zur Verhinderung einer Verkippung der Verdrehsicherung 3, kann sie sowohl an dem ersten Bauteil 1, als auch an dem zweiten Bauteil 2 in Richtung der Drehachse 4 fixiert sein, beispielsweise durch zwei Sicherungsringe oder eine Phase und eine Mutter oder Buchse.

In Fig. 2 ist ein Querschnitt durch das erste und das zweite Bauteil 1, 2 aus Fig. 1 dargestellt, wobei sich das erste Bauteil 1 gegenüber dem zweiten Bauteil 2 in einer Soll-Position befindet. Mit gestrichelten Linien ist zudem eine Ausrichtung des ersten Bauteils 1 gegenüber dem zweiten Bauteil 2 dargestellt, bei welcher das erste Bauteil 1 von der Soll-Position abweichend etwas in Richtung der ersten Raumrichtung 5 und etwas in Richtung der zweiten Raumrichtung 6 versetzt ist. Die Form der zwischen der Verdrehsicherung 3 und dem ersten bzw. dem zweiten Bauteil 1, 2 befindlichen Zwischenräume 11, sowie die Längen der Kontaktflächen 7, 8, 9, 10 müssen mit den zum Ausgleich der Ausformungs- und Ausrichtungsfehler maximal benötigten Verschiebungswegen abgestimmt sein.

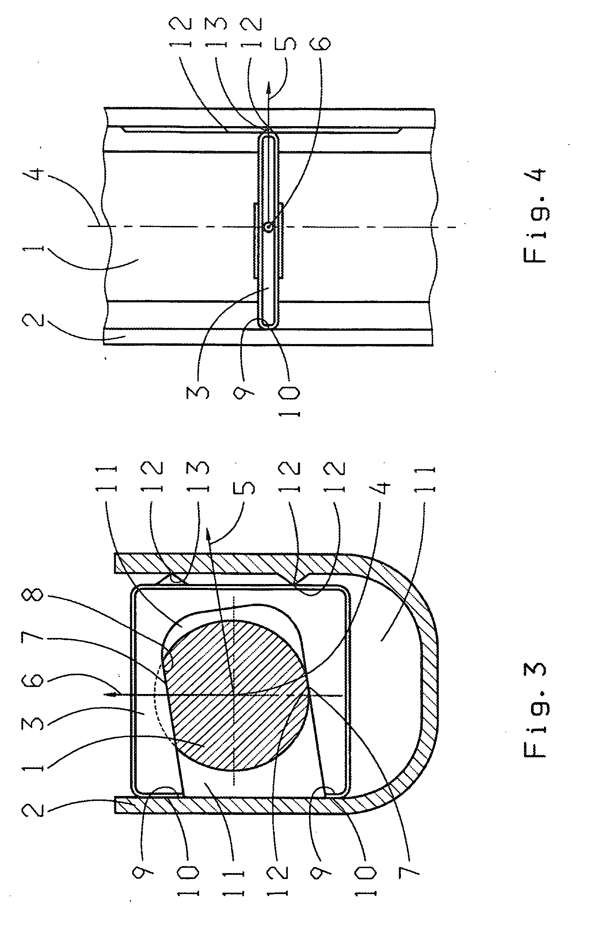

Fig. 3 zeigt eine im Querschnitt U-förmige Verdrehsicherung 3, welche gegenüber dem im Querschnitt kreisrunden ersten Bauteil 1 in die erste Raumrichtung 5 verschieblich ist und gegenüber dem im Querschnitt U-förmigen zweiten Bauteil 2 in die zweite Raumrichtung 6, wobei die beiden Raumrichtungen 5, 6 zwar jeweils orthogonal zur Drehachse 4 verlaufen, jedoch nicht orthogonal zueinander. In dem ersten Bauteil 1 ist eine Nut eingearbeitet, in welche die Verdrehsicherung 3 durch die offene Seite der U-Form eingesetzt ist. Hierdurch wird die Verdrehsicherung 3 sowohl gegen eine Verschiebung gegenüber dem ersten Bauteil 1 in Richtung der Drehachse 4 gesichert, als auch entlang der ersten Raumrichtung 5 geführt. Dabei bilden die Innenseiten der Schenkel der U-Form zwei gegenüberliegende erste Kontaktflächen 7, an welchen eine durch die Nut gebildete zweite Kontaktfläche 8 und eine durch die Rundung des ersten Bauteils gebildete Kontaktlinie 12 anliegen. Zur Führung der Verdrehsicherung 3 entlang der zweiten Raumrichtung 6 wird die Verdrehsicherung 3 auf der linken Seite durch zwei dritter Kontaktflächen 9 geführt, welche an zwei vierten Kontaktflächen 10 des zweiten Bauteils 2 anliegen, sowie auf der rechten Seite mittels einer Kontaktlinie 12 und einem Kontaktpunkt 13, welche an zwei Kontaktlinien 12 des zweiten Bauteils 2 anliegen. Der zwischen der ersten und der zweiten Raumrichtung 5, 6 vorliegende Winkel kann wie oben beschrieben annähernd beliebig sein, wobei die die Raumrichtungen 5, 6 jedoch nicht koaxial zueinander stehen dürfen. Ein Winkel von 90° ist hierbei besonders vorteilhaft, wobei Abweichungen hiervon im Rahmen von üblichen Bauteiltoleranzen zu keiner nennenswerten Verschlechterung der Ausgleichbarkeit von Ausrichtungs- oder Ausformungsfehlern führen. Es gilt jedoch, je kleiner der Winkel zwischen den beiden Raumrichtung 5, 6, desto größer muss der Verschiebungsweg zum Ausgleich von Ausrichtungs- oder Ausformungsfehlern sein, wodurch die Verdrehsicherung 3 unter Umständen sehr groß werden kann.

In Fig. 4 ist eine Draufsicht auf die Verdrehsicherung 3 aus Fig. 3 dargestellt. Diese kann, wie gezeigt, als dünnes Blechteil ausgeführt sein oder, beispielsweise zur Abstützung hoher Drehmomente, im Verhältnis zu ihrem Durchmesser sehr ausgedehnt in Richtung der Drehachse 4 sein. Da das erste Bauteil 1 entlang der Drehachse 4 gegenüber dem zweiten Bauteil 2 verschieblich ist, muss sich die untere Kontaktlinie 12 des zweiten Bauteils 2 entlang des gesamten Verschiebungsweges in Richtung der Drehachse 4 erstrecken.

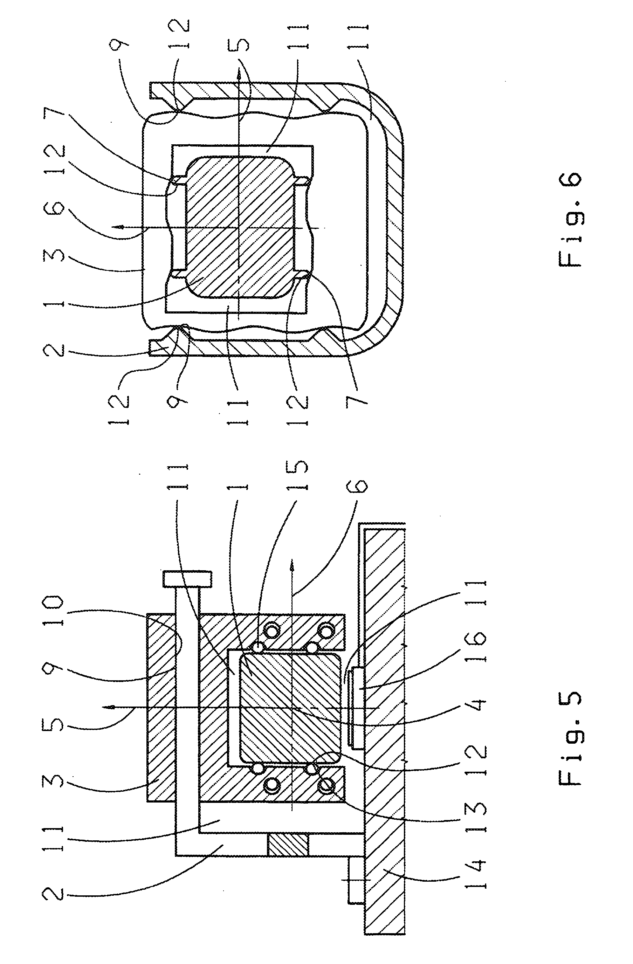

In Fig. 5 ist das zweite Bauteil 2 ortsfest mit einem dritten Bauteil 14 verbunden, wobei das erste Bauteil 1 einen rechteckigen Querschnitt aufweist und zwischen dem L-förmigen zweiten Bauteil 2 und dem plattenförmigen dritten Bauteil 14 angeordnet ist. Damit das erste Bauteil 1 gegen eine Verdrehung um die Drehachse 4 gesichert ist, weist die U-förmige Verdrehsicherung 3 eine rechteckige Öffnung entlang der zweiten Raumrichtung 6 auf, in welche das ebenfalls im Querschnitt rechteckige zweite Bauteil 2 eingeschoben wird. Hierdurch ist die Verdrehsicherung 3 gegenüber dem zweiten Bauteil 2 drehfest und entlang der zweiten Raumrichtung 6 verschieblich. Die Verdrehsicherung 3 umschließt das erste Bauteil 1 mit den Schenkeln der U-Form und weist in jedem Schenkel zwei Linearlager 15 auf, welche eine leichte Verschiebbarkeit des ersten Bauteils 1 entlang der Drehachse 4 und entlang der ersten Raumrichtung 5 gewährleisten und gleichzeitig das erste Bauteil 1 drehfest in der Verdrehsicherung 3 lagern. Die Linearlager 15 können, beispielsweise wie abgebildet, als Linearkugellager mit Kugelrückführung oder als hydrodynamische Lager ausgeführt sein, wobei sie auch derart zwischen der Verdrehsicherung 3 und dem ersten oder zweiten Bauteil 1,2 angeordnet sein können, dass die Verdrehsicherung 3 besonders leicht und verschleißarm gegenüber dem ersten oder dem zweiten Bauteil 1, 2 in die erste bzw. die zweite Raumrichtung 5, 6 verschoben werden kann. Zwischen dem ersten Bauteil 1 und dem dritten Bauteil 14 ist in der gezeigten Ausgestaltung der Erfindung ein ausreichend großer Zwischenraum 11 vorhanden, um darin beispielsweise einen Sensor 16 unterzubringen, welcher die Position oder die Verschiebungsgeschwindigkeit des ersten Bauteils 1 gegenüber dem dritten Bauteil 14 ermitteln kann.

Die Verdrehsicherung 3 und das zweite Bauteil 2 können vorteilhaft als eine vorgefertigte Baugruppe ausgeführt sein, welche entsprechend Fig. 3 auf das erste Bauteil 1 aufgesetzt wird und mit dem dritten Bauteil 14 ortsfest verbunden wird. Hierzu kann das zweite Bauteil 2 auch U- oder I-förmig ausgebildet sein. Es können auch mehrere erste oder zweite Bauteile 1, 2 hintereinander oder nebeneinander angeordnet sein, welche durch eine oder mehrere Verdrehsicherungen 3 drehfest und entlang der ersten bzw. zweiten Raumrichtung 5, 6 verschieblich zueinander sind.

Fig. 6 zeigt einen Schnitt durch ein im Querschnitt rechteckiges erstes Bauteil 1 und ein im Querschnitt U-förmiges zweites Bauteil 2, welche durch eine O-förmige Verdrehsicherung 3 gegen eine gegenseitige Verdrehung gesichert sind. Die Kontaktflächen 7, 9 der Verdrehsicherung sind entlang des Verschiebungsweges nicht konstant in eine Raumrichtung gerichtet, wobei jeweils zwei gegenüberliegende Kontaktflächen 7, 9 komplementär zueinander ausgeformt sind. Das erste und das zweite Bauteil 1, 2 liegen hierbei durch je vier Kontaktlinien 12 derart an den Kontaktflächen 7, 9 der Verdrehsicherung 3 an, dass es bei einer Verschiebung des ersten Bauteils 1 in Richtung der ersten Raumrichtung 5 zwangsläufig zu einer Verschiebung der Verdrehsicherung 3 entlang der zweiten Raumrichtung 6 kommt und dass es bei einer Verschiebung des zweiten Bauteils 2 entlang der zweiten Raumrichtung 6 zu einer Verschiebung der Verdrehsicherung 3 entlang der ersten Raumrichtung 5 kommt. Diese zwangsläufigen Verschiebungen haben jedoch keinen Einfluss auf die Funktion der Verdrehsicherung 3, querkraftfrei eine Drehung des ersten Bauteils 1 gegenüber dem zweiten Bauteil 2 zu verhindern, weshalb eine derart gestaltete Verdrehsicherung 3 ebenfalls im Sinne der Erfindung ist. Wichtig ist hierbei jedoch, dass es durch die Formgebung der Kontaktflächen 7, 8 zu keinem Verkannten der Verdrehsicherung 3 kommt, oder dass sich ein Drehspiel zwischen der Verdrehsicherung 3 und dem ersten oder zweiten 1, 2 Bauteil einstellt.

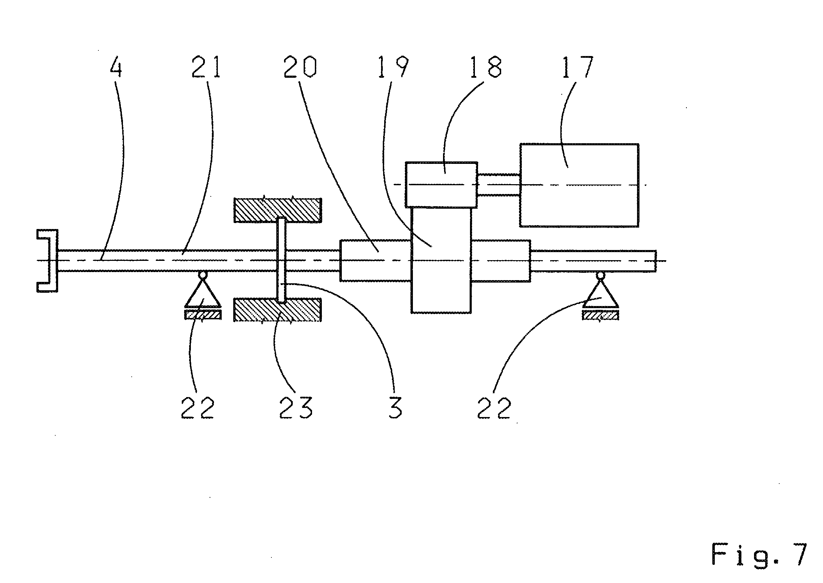

In Fig. 7 ist beispielhaft eine Anwendung einer Verdrehsicherung 3 in einem Aktuator zur Erzeugung einer Linearbewegung dargestellt. Der elektrische Motor 17 des Aktuators versetzt hierbei über ein Zahnrad 18 eine Spindelmutter 19 in Rotation, welche um eine Spindel 20 angeordnet ist. Die Spindel 20 wird durch die Rotation in Abhängigkeit der Rotationsrichtung entlang ihrer Längsachse nach links oder rechts bewegt und verschiebt dabei eine an ihr befestigte Schubstange 21, an welcher die Linearbewegung abgegriffen werden kann. Die Schubstange 21 ist durch zwei Lagerstelle 22 in dem Gehäuse 23 axial verschieblich gelagert. Da auf Grund der zwischen der Spindelmutter 19 und der Spindel 20 herrschenden Reibung und durch die Richtung der mit der Spindelmutter 19 in die Spindel 20 eingeleiteten Kraft immer ein gewisses Drehmoment auf die Spindel 20 übertragen wird, welches zur Umwandlung der Rotationsbewegung in eine Linearbewegung abgestützt werden muss, ist auf der Schubstange 21 die Verdrehsicherung 3 angebracht, die das anliegende Drehmoment auf das Gehäuse 23 überträgt. Die Verdrehsicherung 3 ist in dem Gehäuse 23 in Richtung der Linearbewegung fixiert und liegt gleitend auf der Oberfläche der Schubstange 21 auf. Auf Grund von Ausformungs- und Ausrichtungsfehlern der beiden Lagerstellen 22, der Spindel 20 und der Schubstange 21, sowie durch die Krafteinleitung des Zahnrades 18 in die Spindelmutter 19 kann es in dem Aktuator zu einer dauerhaften oder temporären Abweichung der Position der Schubstange 21 in dem Bereich der Verdrehsicherung 3 von der Soll-Position kommen, was ohne einen Ausgleich durch die Verdrehsicherung 3 zur Einleitung einer Querkraft in die Schubstange 21 führen würde. Dies wiederum hätte einen erhöhten Verschleiß und eine zusätzliche Belastung der Schubstange 21 und der Verdrehsicherung 3 zur Folge.

### Bezugszeichen

- 1: erstes Bauteil
- 2: zweites Bauteil
- 3: Verdrehsicherung
- 4: Drehachse
- 5: erste Raumrichtung
- 6: zweite Raumrichtung
- 7: erste Kontaktfläche
- 8: zweite Kontaktfläche
- 9: dritte Kontaktfläche
- 10: vierte Kontaktfläche
- 11: Zwischenraum
- 12: Kontaktlinie
- 13: Kontaktpunkt
- 14: drittes Bauteil
- 15: Linearlager
- 16: Sensor
- 17: elektrischer Motor
- 18: Zahnrad
- 19: Spindelmutter
- 20: Spindel
- 21: Schubstange
- 22: Lagerstelle
- 23: Gehäuse

## Patentansprüche

1. Verdrehsicherung (3) zur Verhinderung einer Drehbewegung eines ersten Bauteils (1) um eine Drehachse (4) gegenüber einem zweiten Bauteil (2), wobei jeweils das erste Bauteil (1) und das zweite Bauteil (2) drehfest mit der Verdrehsicherung (3) verbunden ist und die Verdrehsicherung (3) das erste Bauteil (1) zumindest teilweise umschließt und zumindest teilweise zwischen dem ersten und dem zweiten Bauteil (1, 2) angeordnet ist, **dadurch gekennzeichnet, dass** die Verdrehsicherung (3) gegenüber dem ersten Bauteil (1) entlang einer orthogonal zur Drehachse (4) verlaufenden ersten Raumrichtung (5) verschieblich ist und dass die Verdrehsicherung (3) gegenüber dem zweiten Bauteil (2) entlang einer orthogonal zur Drehachse (4), jedoch nicht koaxial zur ersten Raumrichtung (5) verlaufenden zweiten Raumrichtung (6) verschieblich ist.

2. Verdrehsicherung (3) nach Anspruch 1, **dadurch gekennzeichnet, dass** das zweite Bauteil (2) das erste Bauteil (1) zumindest teilweise umschließt.

3. Verdrehsicherung (3) nach Anspruch 1, **dadurch gekennzeichnet, dass** die Verdrehsicherung (3) oder das erste Bauteil (1) mindestens eine erste Kontaktfläche (7) aufweist und die Verdrehsicherung (3) oder das ersten Bauteil (1) mindestens eine zweite Kontaktfläche (8) aufweist, wobei die erste und die zweite Kontaktfläche (7, 8) entlang der ersten Raumrichtung (5) verlaufen, wobei die Verdrehsicherung (3) über die erste und die zweite Kontaktfläche (7, 8) derart an dem ersten Bauteil (1) anliegt, dass sie gegenüber diesem drehfest und entlang der ersten Raumrichtung (5) verschieblich ist.

4. Verdrehsicherung (3) nach Anspruch 1, **dadurch gekennzeichnet, dass** die Verdrehsicherung (3) oder das zweite Bauteil (2) mindestens eine dritte Kontaktfläche (9) aufweist und die Verdrehsicherung (3) oder das zweite Bauteil (2) mindestens eine vierte Kontaktfläche (10) aufweist, wobei die dritte und die vierte Kontaktfläche (9, 10) entlang der zweiten Raumrichtung (8) verlaufen, wobei die Verdrehsicherung (3) über die dritte und vierte Kontaktfläche (9, 10) derart an dem zweiten Bauteil (2) anliegt, dass sie gegenüber diesem drehfest und entlang der zweiten Raumrichtung (8) verschieblich ist.

5. Verdrehsicherung (3) nach Anspruch 3 oder 4, **dadurch gekennzeichnet, dass** die Verdrehsicherung (3) oder das erste oder das zweite Bauteil (1, 2) statt eine der Kontaktflächen (7, 8, 9, 10), eine in die gleiche Raumrichtung gerichtete Kontaktlinie (12) aufweist.

6. Verdrehsicherung (3) nach Anspruch 3, 4 oder 5, **dadurch gekennzeichnet, dass** in mindestens einem der Bereichen, in welchen die Verdrehsicherung (3) an dem ersten oder zweiten Bauteil (1, 2) anliegt, eine Spielpassung vorliegt.

7. Verdrehsicherung (3) nach Anspruch 6, **dadurch gekennzeichnet, dass** in mindestens einem der Bereiche, in welchen die Verdrehsicherung (3) an dem ersten oder zweiten Bauteil (1, 2) anliegt, zumindest teilweise eine Übergangspassung vorliegt.

8. Verdrehsicherung (3) nach Anspruch 1, **dadurch gekennzeichnet, dass** das erste und das zweite Bauteil (1, 2) entlang der Drehachse (4) gegeneinander verschieblich sind, wobei die Verdrehsicherung (3) entlang der Drehachse (4) ortsfest an dem ersten oder an dem zweiten Bauteil (1, 2) fixiert ist.

9. Verdrehsicherung (3) nach Anspruch 1, **dadurch gekennzeichnet, dass** das erste Bauteil (1) eine Welle oder eine Schubstange (21) ist und dass das zweite Bauteil (2) ein Gehäuse (23) ist.

10. Verdrehsicherung (3) nach Anspruch 9, **dadurch gekennzeichnet, dass** die Verdrehsicherung (3) Teil eines Aktuators ist der mindestens die Schubstange (21), das Gehäuse (23) und einen Motor (17), sowie eine an der Schubstange (21) befindliche Spindel (20) oder Zahnstange und eine Spindelmutter (19) oder ein Zahnrad umfasst, wobei die Spindel (20) oder die Zahnstange mit dem Motor (17) derart über die Spindelmutter (19) oder dem Zahnrad in Verbindung steht, dass dieser durch eine Rotationsbewegung die Spindel (20) oder die Zahnstange und somit die Schubstange (21) in eine Linearbewegung entlang der Drehachse (4) versetzen kann, wobei die Verdrehsicherung (3) eine Rotation der Schubstange (21) gegenüber dem Gehäuse (23) verhindert.

11. Verdrehsicherung (3) nach Anspruch 10, **dadurch gekennzeichnet, dass** der Aktuator Bestandteil eines Fahrzeugfahrwerks oder einer hilfskraftverstärkten Fahrzeuglenkung ist.

## Claims

1. Anti-rotation safeguard (3) for preventing a rotational movement of a first component (1) about a rotational axis (4) with respect to a second component (2), in each case the first component (1) and the second component (2) being connected in a rotationally fixed manner to the anti-rotation safeguard (3), and the anti-rotation safeguard (3) enclosing the first component (1) at least partially and being arranged at least partially between the first and the second components (1, 2), **characterized in that** the anti-rotation safeguard (3) can be displaced with respect to the first component (1) along a first spatial direction (5) which extends orthogonally with respect to the rotational axis (4), and **in that** the anti-rotation safeguard (3) can be displaced with respect to the second component (2) along a second spatial direction (6) which extends orthogonally with respect to the rotational axis (4) but not coaxially with respect to the first spatial direction (5).

2. Anti-rotation safeguard (3) according to Claim 1, **characterized in that** the second component (2) encloses the first component (1) at least partially.

3. Anti-rotation safeguard (3) according to Claim 1, **characterized in that** the anti-rotation safeguard (3) or the first component (1) has at least one first contact face (7), and the anti-rotation safeguard (3) or the first component (1) has at least one second contact face (8), the first and the second contact faces (7, 8) extending along the first spatial direction (5), the anti-rotation safeguard (3) bearing via the first and the second contact faces (7, 8) against the first component (1) in such a way that it can be displaced with respect to the latter in a rotationally fixed manner and along the first spatial direction (5).

4. Anti-rotation safeguard (3) according to Claim 1, **characterized in that** the anti-rotation safeguard (3) or the second component (2) has at least one third contact face (9), and the anti-rotation safeguard (3) or the second component (2) has at least one fourth contact face (10), the third and the fourth contact faces (9, 10) extending along the second spatial direction (8), the anti-rotation safeguard (3) bearing via the third and fourth contact faces (9, 10) against the second component (2) in such a way that it can be displaced with respect to the latter in a rotationally fixed manner and along the second spatial direction (8).

5. Anti-rotation safeguard (3) according to Claim 3 or 4, **characterized in that** the anti-rotation safeguard (3) or the first or the second component (1, 2) has, instead of one of the contact faces (7, 8, 9, 10), a contact line (12) which is directed in the same spatial direction.

6. Anti-rotation safeguard (3) according to Claim 3, 4 or 5, **characterized in that** there is a clearance fit in at least one of the regions, in which the anti-rotation safeguard (3) bears against the first or second component (1, 2).

7. Anti-rotation safeguard (3) according to Claim 6, **characterized in that** there is at least partially a clearance fit in at least one of the regions, in which the anti-rotation safeguard (3) bears against the first or second component (1, 2).

8. Anti-rotation safeguard (3) according to Claim 1, **characterized in that** the first and the second components (1, 2) can be displaced with respect to one another along the rotational axis (4), the anti-rotation safeguard (3) being fixed in a stationary manner on the first or on the second component (1, 2) along the rotational axis (4).

9. Anti-rotation safeguard (3) according to Claim 1, **characterized in that** the first component (1) is a shaft or a push rod (21), and **in that** the second component (2) is a housing (23).

10. Anti-rotation safeguard (3) according to Claim 9, **characterized in that** the anti-rotation safeguard (3) is part of an actuator which comprises at least the push rod (21), the housing (23) and a motor (17), and a rack or spindle (20) which is situated on the push rod (21), and a spindle nut (19) or a gearwheel, the spindle (20) or the rack being connected to the motor (17) via the spindle nut (19) or the gearwheel in such a way that, by way of a rotational movement, it can set the spindle (20) or the rack and therefore the push rod (21) into a linear movement along the rotational axis (4), the anti-rotation safeguard (3) preventing a rotation of the push rod (21) with respect to the housing (23).

11. Anti-rotation safeguard (3) according to Claim 10, **characterized in that** the actuator is a constituent part of a vehicle chassis or a power-assisted vehicle steering system.

## Revendications

1. Sécurité antirotation (3) pour empêcher un mouvement de rotation d'un premier composant (1) autour d'un axe de rotation (4) par rapport à un deuxième composant (2), le premier composant (1) et le deuxième composant (2) étant à chaque fois connectés de manière solidaire en rotation à la sécurité antirotation (3), et la sécurité antirotation (3) entourant au moins en partie le premier composant (1) et étant disposée au moins en partie entre le premier et le deuxième composant (1, 2), **caractérisée en ce que** la sécurité antirotation (3) est déplaçable par rapport au premier composant (1) le long d'une première direction spatiale (5) s'étendant perpendiculairement à l'axe de rotation (4) et **en ce que** la sécurité antirotation (3) est déplaçable par rapport au deuxième composant (2) le long d'une deuxième direction spatiale (6) perpendiculairement à l'axe de rotation (4) mais ne s'étendant pas coaxialement à la première direction spatiale (5).

2. Sécurité antirotation (3) selon la revendication 1, **caractérisée en ce que** le deuxième composant (2) entoure au moins en partie le premier composant (1).

3. Sécurité antirotation (3) selon la revendication 1, **caractérisée en ce que** la sécurité antirotation (3) ou le premier composant (1) présente au moins une première surface de contact (7) et la sécurité antirotation (3) ou le premier composant (1) présente au moins une deuxième surface de contact (8), la première et la deuxième surface de contact (7, 8) s'étendant le long de la première direction spatiale (5), la sécurité antirotation (3) s'appliquant par rapport de la première et de la deuxième surface de contact (7, 8) contre le premier composant (1) de telle sorte qu'elle soit solidaire en rotation par rapport à celui-ci et qu'elle soit déplaçable le long de la première direction spatiale (5).

4. Sécurité antirotation (3) selon la revendication 1, **caractérisée en ce que** la sécurité antirotation (3) ou le deuxième composant (2) présente au moins une troisième surface de contact (9) et la sécurité antirotation (3) ou le deuxième composant (2) présente au moins une quatrième surface de contact (10), la troisième et la quatrième surface de contact (9, 10) s'étendant le long de la deuxième direction spatiale (8), la sécurité antirotation (3) s'appliquant par le biais de la troisième et de la quatrième surface de contact (9, 10) contre le deuxième composant (2) de telle sorte qu'elle soit solidaire en rotation par rapport à celui-ci et qu'elle soit déplaçable le long de la deuxième direction spatiale (8).

5. Sécurité antirotation (3) selon la revendication 3 ou 4, **caractérisée en ce que** la sécurité antirotation (3) ou le premier ou le deuxième composant (1, 2) présente, au lieu d'une des surfaces de contact (7, 8, 9, 10), une ligne de contact (12) orientée dans la même direction spatiale.

6. Sécurité antirotation (3) selon la revendication 3, 4 ou 5, **caractérisée en ce que** dans au moins l'une des régions dans lesquelles la sécurité antirotation (3) s'applique contre le premier ou le deuxième composant (1, 2), il existe une adaptation du jeu.

7. Sécurité antirotation (3) selon la revendication 6, **caractérisée en ce que** dans au moins l'une des régions dans lesquelles la sécurité antirotation (3) s'applique contre le premier ou le deuxième composant (1, 2), il existe au moins en partie une adaptation de transition.

8. Sécurité antirotation (3) selon la revendication 1, **caractérisée en ce que** le premier et le deuxième composant (1, 2) sont déplaçables l'un par rapport à l'autre le long de l'axe de rotation (4), la sécurité antirotation (3) étant fixée le long de l'axe de rotation (4) de manière fixe au premier ou au deuxième composant (1, 2).

9. Sécurité antirotation (3) selon la revendication 1, **caractérisée en ce que** le premier composant (1) est un arbre ou une tringle de poussée (21) et **en ce que** le deuxième composant (2) est un boîtier (23).

10. Sécurité antirotation (3) selon la revendication 9, **caractérisée en ce que** la sécurité antirotation (3) fait partie d'un actionneur qui comprend au moins la tringle de poussée (21), le boîtier (23) et un moteur (17), ainsi qu'une broche (20) se trouvant sur la tringle de poussée (21), ou une crémaillère et un écrou de broche (19) ou une roue dentée, la broche (20) ou la crémaillère étant en liaison avec le moteur (17) par le biais de l'écrou de broche (19) ou de la crémaillère, de telle sorte que celui-ci, par un mouvement de rotation, puisse animer d'un mouvement linéaire le long de l'axe de rotation (4) la broche (20) ou la crémaillère et donc la tringle de poussée (21), la sécurité antirotation (3) empêchant une rotation de la tringle de poussée (21) par rapport au boîtier (23).

11. Sécurité antirotation (3) selon la revendication 10, **caractérisée en ce que** l'actionneur fait partie d'un châssis d'un véhicule ou d'une direction assistée d'un véhicule.
